# EUROPEAN PATENT SPECIFICATION

(11) **EP 1 171 353 B1**
(45) Date of publication and mention of the grant of the patent: **13.08.2008**
(21) Application number: 99966790.0
(22) Date of filing: 22.12.1999
(51) Int. Cl.: B65D 1/36, B65D 85/52, A01G 9/10, A01C 11/02

(54) **Improved indexing of horticultural trays**
Verbesserte Indexierung von gärtnerischen Behältern
Indexage amélioré de bacs d'horticulture

(30) Priority: 24.12.1998 AU PP792498
(43) Date of publication of application: 16.01.2002
(73) Proprietor: WILLIAMES HI-TECH INTERNATIONAL PTY. LIMITED, Warragul Victoria 3820 (AU)
(72) Inventor: WILLIAMES, Geoffrey, Alan, Warragul, VIC 3820 (AU)
(74) Representative: Hedley, Nicholas James Matthew
(86) International application number: PCT/AU1999/001151
(87) International publication number: WO 2000/038996

(56) References cited:
- WO-A-95/04451
- WO-A-98/10990
- PATENT ABSTRACTS OF JAPAN & JP 09 009 735 A (YANMAR AGRICULT EQUIP CO. LTD.) 14 January 1997

## Description

The present invention relates to improvements in horticultural trays intended for indexing during seedling transfer processes, and indexing arrangements utilising such trays.

### Background

It is known from WO 95/04451 to produce propagation trays from moulded expanded polystyrene material where the trays are mechanically indexed through a handling mechanism by indexing rods on a drum configuration of such rods where the rods engage in grooves formed in base region of the expanded polystyrene material between rows of propagating cells formed therein. Propagation trays including an array of propagating cells where the cells include defined walls have also been proposed, however attempts to mechanically index horticultural trays have normally relied on interconnected multiple rollers which engage between the lower extremities of the tray cells. This method when using thin walled light weight low cost cell construction allows the deflection of the lower extremity of the cell and thereby looses the accuracy necessary to correctly align a row of cells adjacent to a receiving mechanism. It has also been a widely used practice of utilising tapered cells with the ability to nest, that is the outside of an upper first tray to fit inside the upper surface of a lower second tray in the interest of conserving transport space and cost.

In other examples indexing has been achieved on the ends or sides of the trays, which in certain field conditions are prone to the introduction of mud or contamination that can prevent indexing and in the case of indexing off the lower portion of the cells both contamination by mud and extraneous root materials can prevent correct indexing and location of the tray and intermittent jamming particularly when using low cost indexing means.

It is the intent of this invention to provide a positive accurate indexing mean centre line cell to cell across the tray and from tray to tray and which is in a position to withstand the rigorous loadings and stress encountered when a number of trays are placed one on top of each other in a vertical position and when fully loaded with saturated soil medium and plants. The indexing mechanism may be positioned so as to prevent any deflection due to load and to provide precise indexing means. The location of the indexing to be in the most protected part of the tray structure to prevent entry of foreign materials which could cause jamming and inaccuracy of indexing.

Accordingly, the present invention provides a moulded plastics material tray having a plurality of cells disposed in a predetermined array with each said cell being adapted to contain a seedling together with a plug of growing medium, said cells at least in an indexing region of said tray being aligned in rows between opposed edges of the tray with indexing engagement means integrally formed with said tray extending between two adjacent said rows of said cells, said tray being **characterized in that** said cells have thin walls and that said indexing means being configured to define a plurality of aligned and uniformly spaced indexing teeth receiving zones extending between said opposed edges of the tray with the indexing teeth receiving zones at least being located between two adjacent said rows of said cells on either side of the tray, a restraining member of said indexing engagement means extending between opposed said walls of respective said cells in each of the two adjacent said rows of said cells, the indexing teeth receiving zones being located between said restraining members. Conveniently, when two such trays are located in edge to edge contact, a said indexing teeth receiving zone is formed between an indexing engagement means of each said tray.

Preferably a flange region extending downwardly from an upper surface of each said tray towards the base region of each said tray is provided on at least two and preferably all four sides of the tray, the flange region having a lower edge surface adapted to rest on an upper peripheral edge surface of a similarly configured tray when the trays are nested one into the other. Conveniently a cut out region extends through said flange region aligned with indexing teeth receiving zones in the indexing region of the tray.

It will of course be appreciated from the foregoing that because the indexing engagement means are necessarily located between two adjacent cells, the indexing region or regions are necessarily located inwardly of the peripheral edges of the tray. In one preferred embodiment, the indexing region is located between the outermost row of cells and the next inwardly located row of cells. It is, however, possible to locate the indexing zone in other positions even further in from a peripheral edge of the tray. In a preferred embodiment two indexing regions are provided laterally spaced on opposed sides of a tray. In a still further preferred embodiment an indexing region may comprise two adjacent aligned rows of indexing teeth receiving zones. It is of course also possible to have three or more spaced indexing zones with at least one such indexing zone being located centrally of the tray.

Each row of indexing teeth receiving zones are adapted, in use, to engage with teeth of an indexing wheel or disc of an indexing mechanism, the teeth being complimentary in shape to the indexing teeth receiving zones. Conveniently the wheels or discs may be mounted on a common rotational shaft at at least one of the wheels or discs may be mounted for limited axial movement along the shaft to allow for minor differences in size of trays that might arise from differing thermal expansion rates or the like.

Several preferred embodiments of the present invention will now be described with reference to the accompanying drawings in which :-
FIG 1 is a side elevation of a square or rectangular tray in accordance with a first preferred embodiment of this invention;
FIG 2 is a side elevation of the tray of FIG 1 shown 90° displaced from the view of FIG 1;
FIG 3 is a section view taken alone line III-III of FIG 1;
FIG 4 is a detailed view of one end of the tray shown in FIG 1;
FIG 5 is a section view similar to FIG 3 but also showing an indexing wheel;
FIG 6 is a view similar to FIG 1 also showing the indexing wheel of FIG 5;
FIG 7 is a view similar to FIG 6 showing another preferred embodiment utilising two indexing wheels adjacent each end of the tray;
FIG 8 is a partial and enlarged sectional view taken along line VIII-VIII of FIG 2;
FIG 9 is a view similar to FIG 6 but showing two trays in side by side indexing configuration;
FIG 10 is a view similar to FIG 9 but showing restraining channels engaging side edges of the trays;
FIG 11 is an underneath plan view of one preferred form of tray;
FIG 12 is a view similar to FIG 7 but showing two trays in side by side indexing configuration;
FIG 13 is a view similar to FIG 11 but showing two trays in a feed position in side by side configuration;
FIG 14 is a view similar to FIG 13 but showing the top surfaces of the side by side trays;
FIG 15 is a detail view of one side edge region of a tray held by a side guide channel; and
FIG 16 is a detail view of the side edge regions.

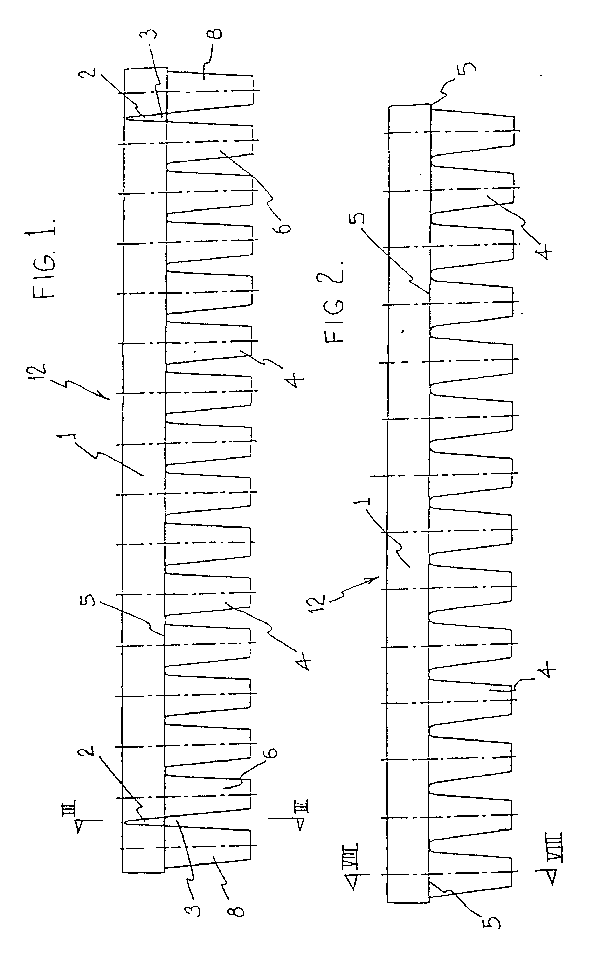

A front side elevation view of the tray (12) is shown in FIG 1. This view shows the upper support region (1) and the indexing engaging and restraining tooth (2) and the indexing disc tooth entry point (3) which are positioned on the outer extremities of the trays to give horizontal support and stability.

FIG 2 shows an end elevation of the tray where the lower cells (4) are free to rest in the upper surface of the next tray without jamming due to a de-nesting edge (5). The end elevation view of FIG 2 is 90° displaced from the front side elevation view of FIG 1.

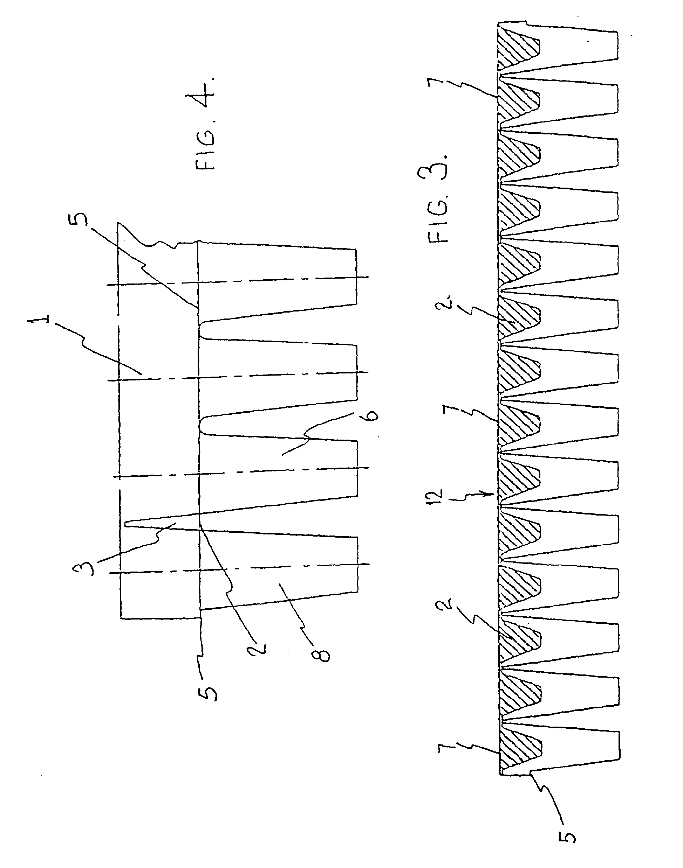

In FIG 3 the indexing restraining members (2) are shown in section which are attached directly and integrally with the underside of the upper surface (7) of the tray to protect against the entry of foreign matter including plant tops and in one preferred embodiment are situated between cells (6 & 8) (FIG 4) which provides additional strength to the tray structure. This also does not interfere with tray nesting as the lower extremity of the tooth (2) is level with the underside of the de-nesting edge (5) and upper support region stiffening members.

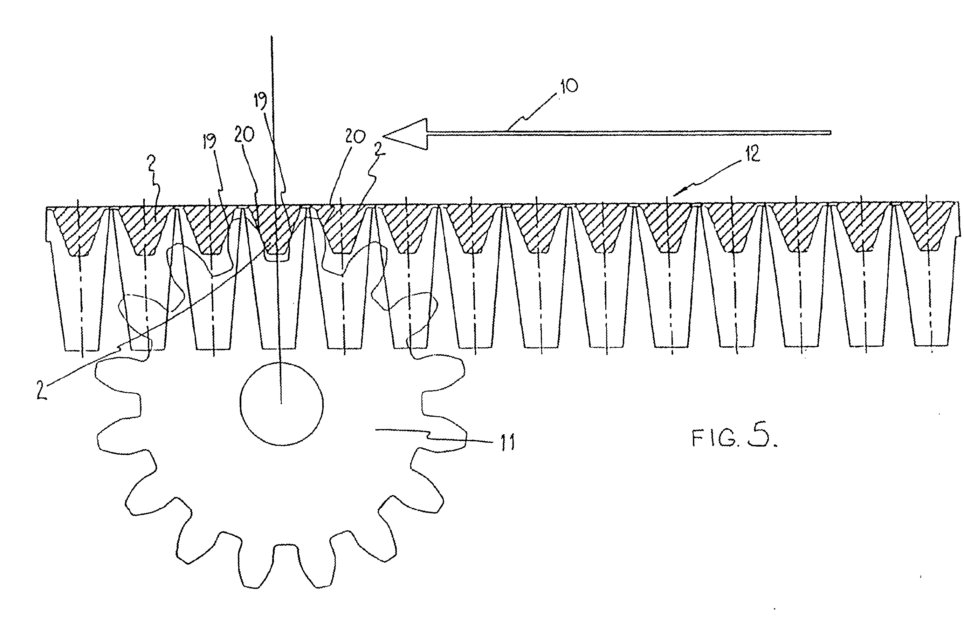

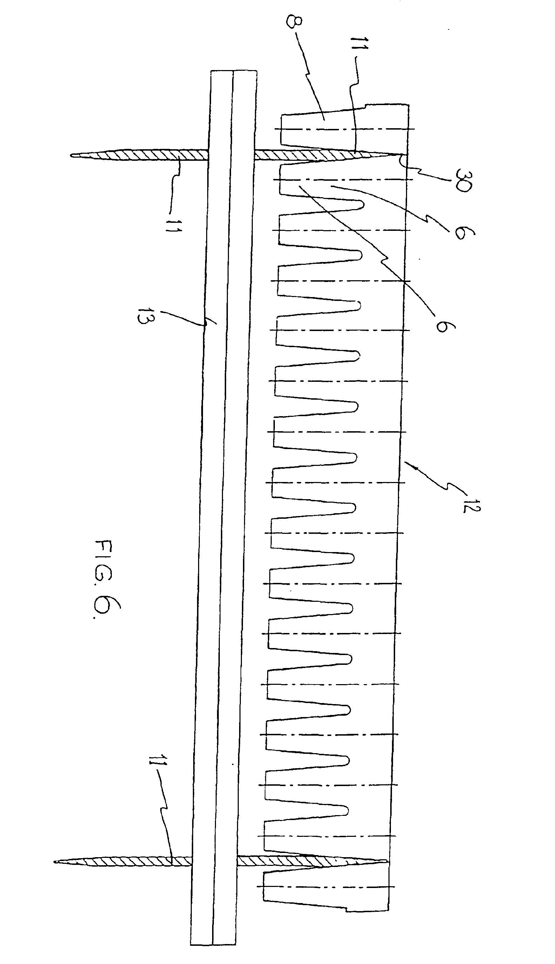

An indexing disc or wheel (11) is illustrated in FIG 5. The indexing disc (11) engages between the restraining teeth (2) and is controlled by an indexing mechanism (not shown). By this means a precise control is achieved of the indexed position of the tray. Indexing movements of the tray are achieved vertically in a preferred embodiment but this is not essential to the invention as horizontal indexing is also possible. FIG 6 illustrates engagement of a tapered indexing disc or wheel (11) entering between the lower extremity of the cells (6 & 8). The disc (11) rolls upwardly between the cells until it engages in the area of greatest structural integrity immediately on the under surface 30 adjacent to the apex of the upper extremity of the cells. This region also has the greatest structural integrity, and by this means, precise alignment of the tray cells laterally (FIG 6) is achieved. If the direction of force acting on the tray (12) acts in the direction of arrow (10), then the force is restrained by the indexing disc (11) on the tooth faces at (19) and (20) providing a wide area of contact.

FIG 6 is one embodiment of the invention which shows a single tray (12) engaged with the indexing discs (11) between the first and second cells (6, 8) at either end of the tray. In one embodiment one indexing disc will be fixed to the shaft (13) and by means of a slidable key or spline, the outer disc (11) may be allowed to move linearly to allow for tray expansion and contraction while maintaining tray alignment with the fixed indexing disc. It will of course be appreciated that the location of the discs 11 may be between other cell rows as desired.

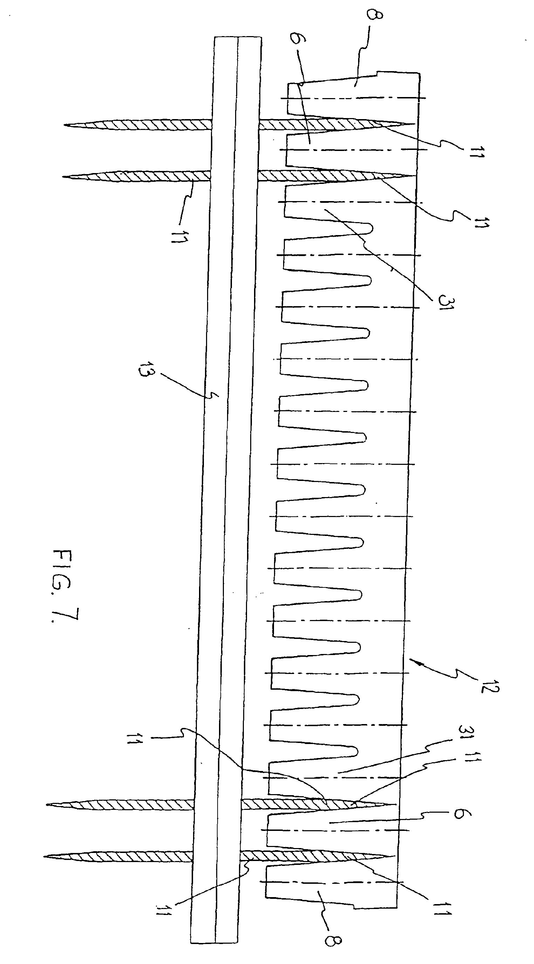

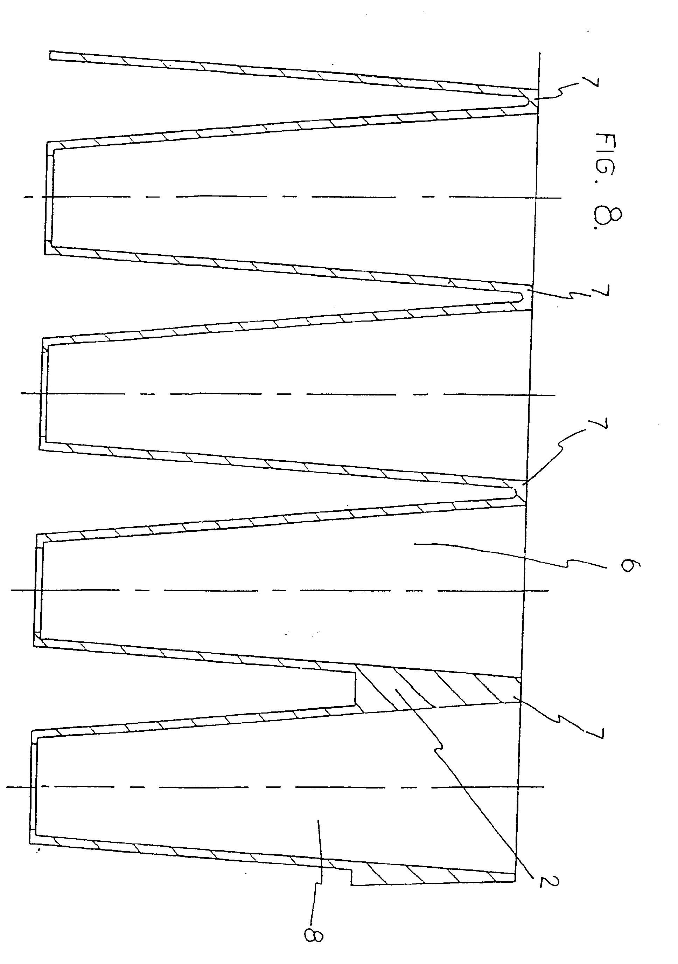

FIG 7 illustrates another embodiment which may be utilised in extreme application with heavy weight or high speed impact indexing with two or more indexing discs (11) fitted between the first, second and third rows of cells (8, 6 and 31) on both end regions of each tray or series of trays. In FIG 8, an expanded view of the disc engaging region is shown in cross-section further illustrating the disc engaging and restraining member (2). This member (2) is supported between the cells (6 & 8) and attached to the upper surface and forms part of the underside of the upper portion of the tray (7) to restrain and prevent rotational forces exerted on the member (2) giving both structural integrity to the tray with greater stiffness and a very high degree of accuracy for indexing.

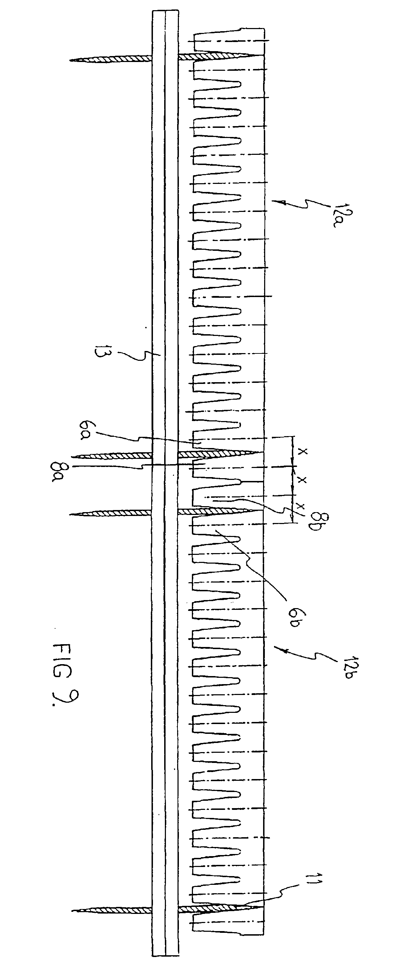

FIG 9 illustrates another preferred embodiment where two or more trays (12a, 12b) are positioned adjacent to each other in a horizontal position with one or more engagement or indexing discs (11) positioned at either end region of the two or more trays with the discs being internally engaged inside the tray (12a, 12b). This arrangement allows for absolute accuracy of horizontal and vertical alignment of each tray which allows for precise indexing of horizontal rows of cells to be aligned with the receiving mechanism row to row horizontally across the tray and centre to centre of each row of cells, vertically across the tray and precisely the same from the last row of the last tray to the first row of a second tray both horizontally and vertically.

The tapered alignment discs (11) also ensures that the trays (12a, 12b) and individual cells laterally dispersed across the width of the tray remain precisely on centre distances X cell (6a) to cell (8a) and tray to tray (cell 8a to 8b) with the centre distance of the cells X being equal both horizontally and vertically with the cell spacings the same on the last row of cells on the first tray to the centre of the first row of cells on the second tray. By this means precise central alignment both in the vertical and horizontal of a multiple of trays (12, 12b) can be maintained with precise alignment with a receiving means for seedlings for high speed transfer of plugs / modules and plants from the tray into the receiving mechanism.

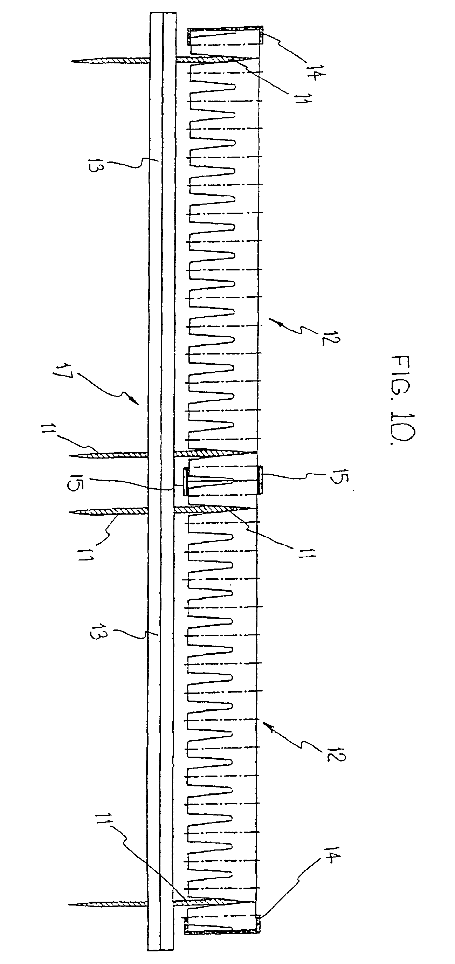

FIG 10 shows inside elevation view channel tracks (14) that restrain the outer end of one, two or more trays (12). Where two or more trays are used, a central member (or members) 15 may be provided to restrain the inner edges of the trays 12. Again an indexing mechanism 17 including wheels 11 and a common shaft 13 are provided, the shaft 13 being indexed by a control system not shown.

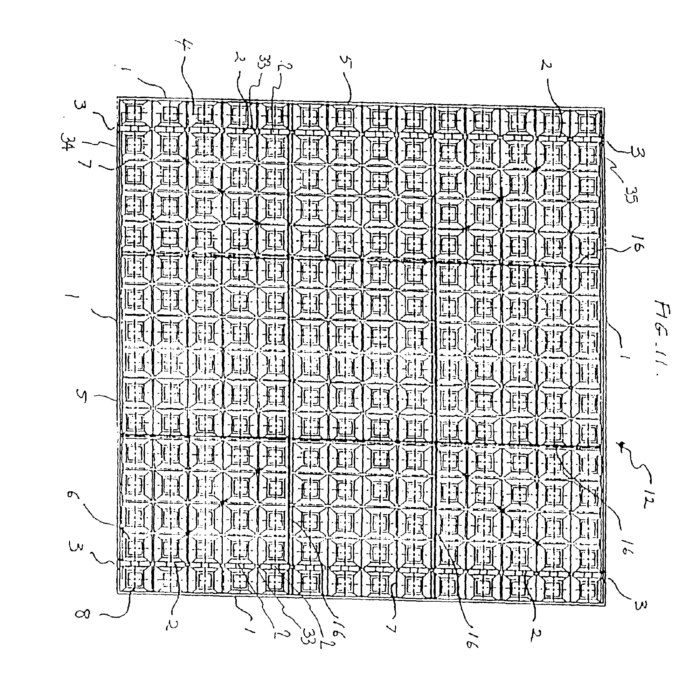

FIG 11 shows a rear or underneath plan view of a tray (12) including cross supports (16), the upper support region (1), indexing and restraining tooth members (2), indexing teeth receiving zones (33), the indexing disc entry points (3), lower cells (4), a de-nesting edge (5), and the underside of the upper surface (7). The cross supports (16) are preferably the same height as the de-nesting edge (5). The indexing engagement means (2) extend in an aligned row fully between edges (34, 35) of the tray (12).

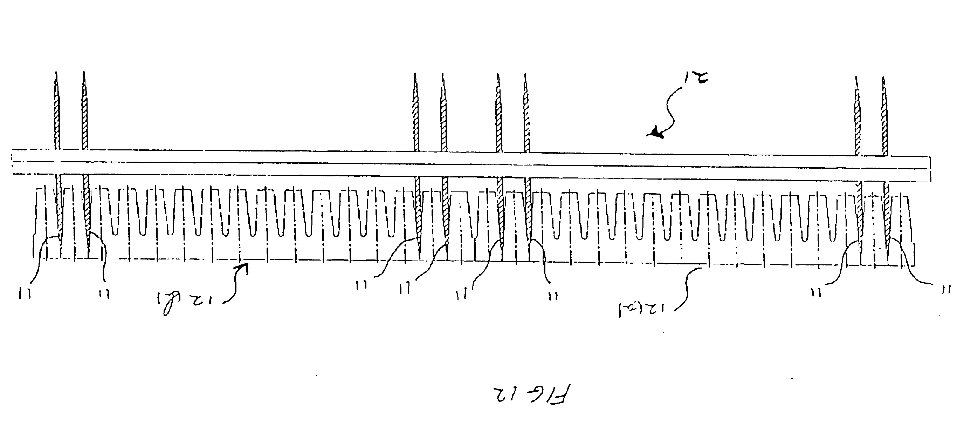

FIG 12 shows two trays (12a) and (12b) each supported with twin indexing discs (11) at each end of each trays and providing horizontal support of two or any number of trays horizontally by means of a unified indexing assembly 21. The provision of a multiple number of trays allows for a greater number of plugs / modules to be transferred at one time to the mechanism for selectively transplanting. This factor increases the efficiency of a transplanting machine. The effect of multiples of trays horizontally and vertically increases the storage capacity of plugs / modules and plants and therefore reduces labour requirements for transplanting.

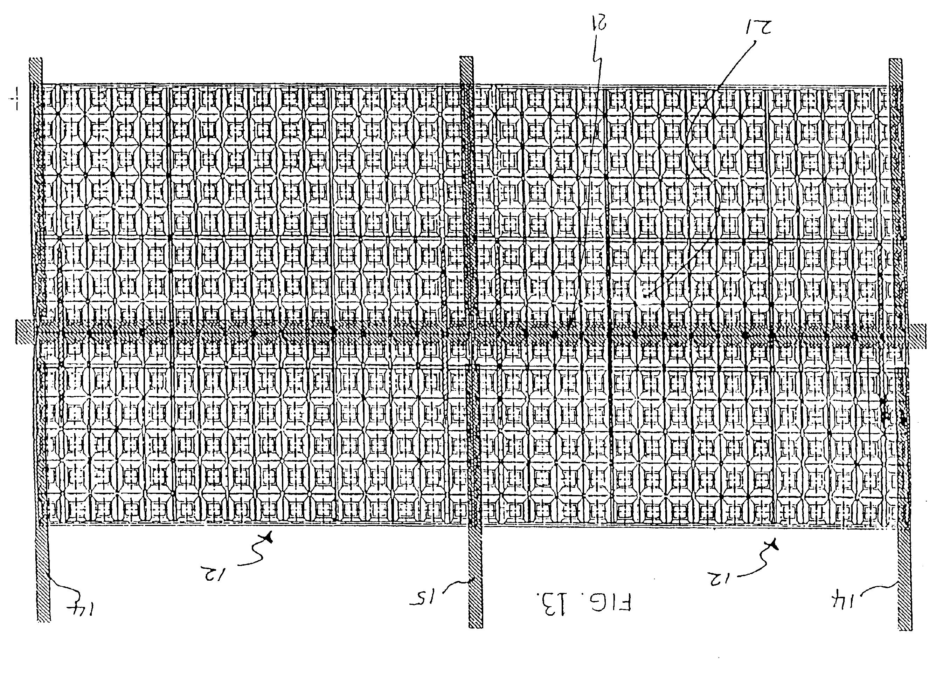

FIG 13 shows a multiple of trays (12) from the rear elevation which are horizontally restrained by an indexing assembly 21 and by tray edge vertical restrains (14) and a tray to tray vertical edge restraint (15) as described in FIG 10.

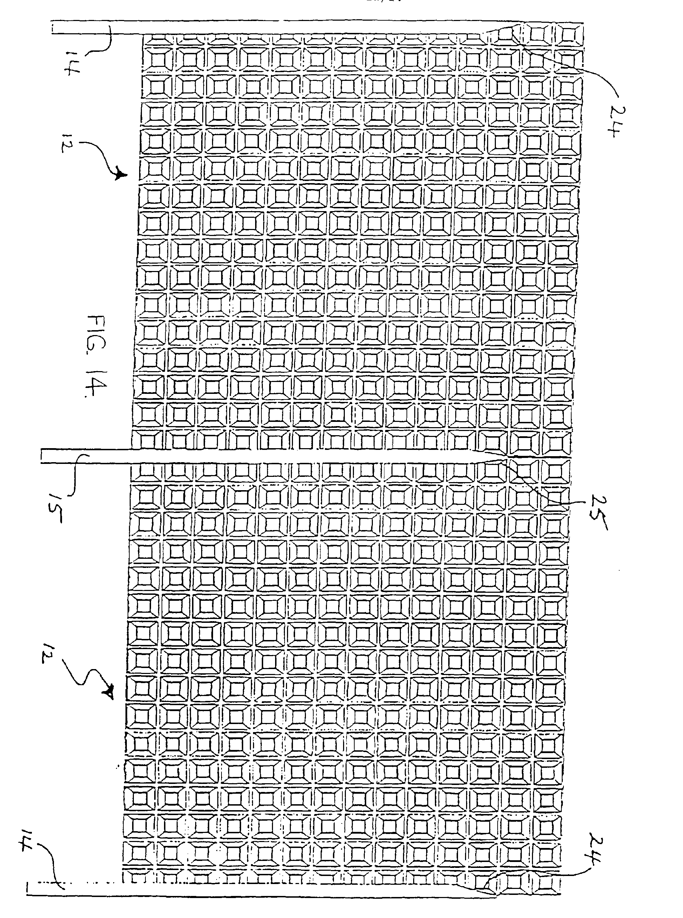

FIG 14 shows a front elevation or top surface of trays (12) and the vertical tray edge restraints (14) and tray to tray restraint (15) as described in FIG 10. The entry point at the top (24) of the tray edge restraints (14) and the top entry point (25) of the tray to tray vertical restraint (15) guide the descending plant stems into correct alignment in relation to the cell in which they are growing at the tray ends. Single or any number of multiples of trays (12) can be restrained and indexed in this manner.

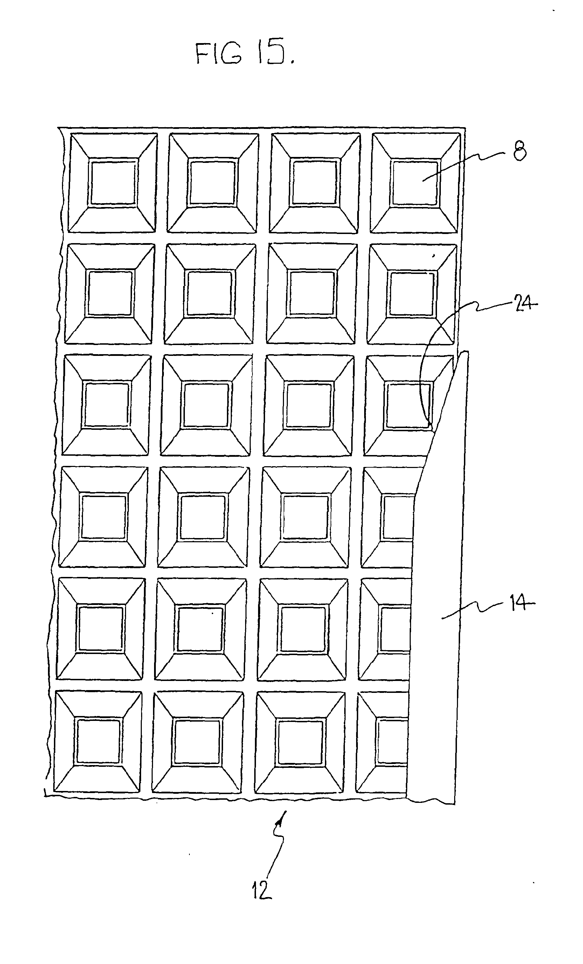

FIG 15 shows a part of a tray (12) engaged in the tray end vertical retainer (14) and the sloping entry point (24) which guides any misaligned plant stems into central position in cell (8).

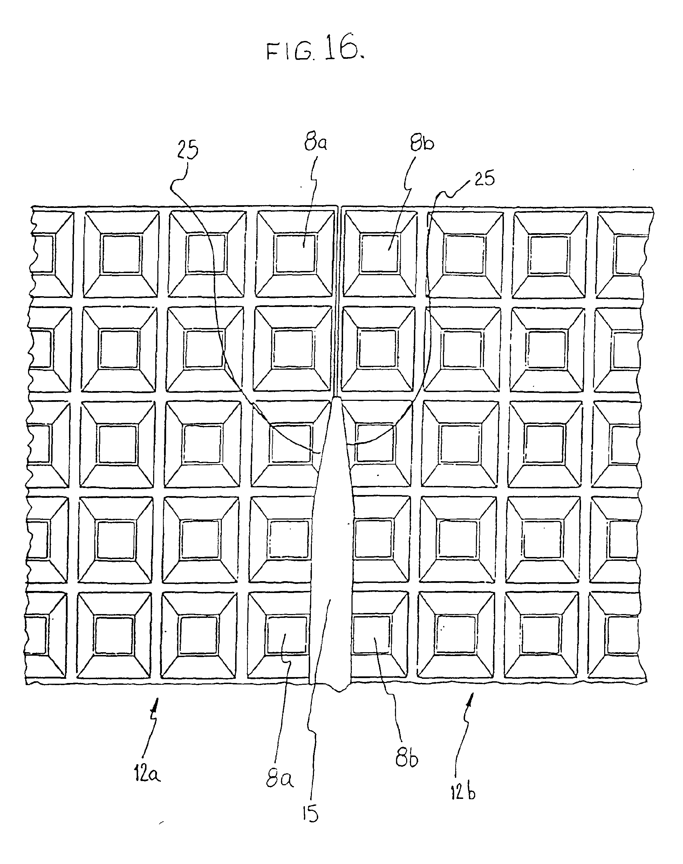

FIG 16 shows the vertical retainer (15) for trays (12a) to (12b) with dual sloping upper surfaces (25) to guide misaligned plant stems centrally into cells (8a) and (8b). By this means any number of multiples of trays can be effectively indexed.

## Claims

1. A moulded plastics material tray (12) having a plurality of cells (4, 6, 8) disposed in a predetermined array with each said cell (4, 6, 8) being adapted to contain a seedling together with a plug of growing medium, said cells (4, 6, 8), at least in an indexing region of said tray being aligned in rows between opposed edges (34, 35) of the tray (12) with indexing engagement means (2) integrally formed with said tray (12) extending between two adjacent said rows of said cells (6, 8) said tray (12) being **characterized in that** said cells (4, 6, 8), have thin walls and that said indexing means (2) being configured to define a plurality of aligned and uniformly spaced indexing teeth receiving zones (33) extending between said opposed edges (34, 35) of the tray (12) with the indexing teeth receiving zones (33) at least being located between two adjacent said rows of said cells (6, 8) on either side of the tray (12), a restraining member (2) of said indexing engagement means (2) extending between opposed said walls of respective said cells in each of the two adjacent said rows of said cells (6, 8), the indexing teeth receiving zones (33) being located between said restraining members (2).

2. A tray according to Claim 1 **characterized in that** no openings pass from an upper surface of the tray to a region between the two adjacent said rows of said cells (6, 8).

3. A tray according to Claim 1 or Claim 2, **characterized in that** the tray (12) is square or rectangular in plan view.

4. A tray according to Claim 3, **characterized in that** a flange region (1) extends downwardly from an upper surface of said tray (12) on at least two opposed side edge regions.

5. A tray according to Claim 4, **characterized in that** said flange region (1) extends downwardly from the upper surface along all four side edge regions of the tray (12).

6. A tray according to Claim 4 or Claim 5, **characterized in that** the flange edge regions (1) have a lower edge surface (5) adapted to rest on an upper peripheral edge surface of a similarly configured said tray (12) when the trays (12) are nested one into the other.

7. A tray according to any one of Claims 4 to 6, **characterized in that** a cut out region (3) extends through opposed said flange regions (1) aligned with indexing teeth receiving zones (33) in the indexing region of the tray (12).

8. A tray according to Claim 1, **characterized in that** each row of said indexing teeth receiving zones (33) are located between the two outermost adjacent said rows of said cells (6, 8) on either side of the tray (12).

9. A tray according to Claim 1 or Claim 8, **characterized in that** at least three rows of said indexing teeth receiving zones (33) are located spaced apart across said tray (12).

10. A tray according to Claim 10, **characterized in that** a pair of rows of said indexing teeth receiving zones (33) are provided between three adjacent said rows of said cells (6, 8) on either side of the tray (12).

11. A tray according to any one of Claims 1 to 10, in combination with a tray feed means (14, 15), and an indexing assembly (21), combination being **characterized by** said tray feed means (14, 15) including tray edge support guides (14, 15) allowing a said tray (12) to move there along and said indexing assembly (21) including a drive shaft (13) carrying an indexing disc (11) for each aligned group of said indexing teeth receiving zones (33) on the tray (12), the or each said indexing disc (11) having teeth complementary in shape to the indexing teeth receiving zones (33).

12. A combination according to Claim 11, **characterized in that** all said indexing discs (11) for a said tray (12) are rotationally fixed relative to the drive shaft (13), a first one of said indexing discs (11) being also axially fixed relative to the drive shaft (13) with all other said indexing discs (11) being axially movable relative to said drive shaft (13).

13. A combination according to Clam 11 or Claim 12 **characterized in that** axial faces (19, 20) of said teeth taper towards their outermost point whereby the axial faces (19, 20) and circumferential faces of the teeth are complementary in shape to the indexing teeth receiving zones (33).

14. A combination according to any one of Claims 11 to 13, **characterized in that** the tray feed means (14, 15) enables at least two said trays (12) to be fed in side by side configuration.

15. A combination according to any one of Claims 11 to 14, wherein the tray edge support guides (14, 15) include infeed ramp surfaces arranged to urge seedling stem or foliage material inwardly of said tray (12).

## Patentansprüche

1. Geformtes Kunststoffmaterialtablett (12) mit einer Mehrzahl von in einer vorbestimmten reihenförmigen Anordnung angeordneten Zellen (4, 6, 8), wobei jede Zelle (4, 6, 8) ausgelegt ist, einen Sämling zusammen mit einem Stopfen aus Wachstumsmedium zu enthalten, wobei die Zellen (4, 6, 8) zumindest in einem Indexierbereich des Tabletts in Reihen zwischen gegenüberliegenden Rändern (34, 35) des Tabletts (12) fluchten, wobei sich einstückig mit dem Tablett (12) ausgebildete Fortschalt-Eingriffsmittel (2) zwischen zwei benachbarten Reihen von Zellen (6, 8) erstrecken, **dadurch gekennzeichnet, dass** die Zellen (4, 6, 8) dünne Wände aufweisen und dass die Fortschalt-Mittel (2) so ausgestaltet sind, dass sie eine Mehrzahl von fluchtenden und einheitlich voneinander beabstandeten Zonen (33) zur Aufnahme von Schaltzähnen festlegen, welche Zonen sich zwischen den gegenüberliegenden Rändern (34, 35) der Tasse (12) erstrecken, wobei sich die Schaltzähne-Aufnahme-Zonen (33) zumindest zwischen zwei benachbarten Reihen von Zellen (6, 8) an jeder Seite des Tabletts (12) befinden, und wobei sich ein Rückhalteelement (2) der Fortschalt-Eingriffsmittel (2) zwischen gegenüberliegenden Wänden der entsprechenden Zellen in jeder der beiden benachbarten Reihen der Zellen (6, 8) erstreckt, wobei sich die Schaltzähne-Aufnahme-Zonen (33) zwischen den Rückhalteelementen (2) befinden.

2. Tablett nach Anspruch 1, **dadurch gekennzeichnet, dass** keine Öffnungen von einer oberen Oberfläche des Tabletts zu einem Bereich zwischen den beiden benachbarten Reihen der Zellen (6, 8) verlaufen.

3. Tablett nach Anspruch 1 oder 2, **dadurch gekennzeichnet, dass** das Tablett (12) in Draufsicht quadratisch oder rechteckig ist.

4. Tablett nach Anspruch 3, **dadurch gekennzeichnet, dass** sich ein Flanschbereich (1) von einer oberen Fläche des Tabletts (12) an zumindest zwei gegenüberliegenden Seitenrandbereichen nach unten erstreckt.

5. Tablett nach Anspruch 4, **dadurch gekennzeichnet, dass** sich der Flanschbereich (1) entlang aller vier Seitenrandbereiche des Tabletts (12) von der oberen Fläche nach unten erstreckt.

6. Tablett nach Anspruch 4 oder 5, **dadurch gekennzeichnet, dass** die Flanschrandbereiche (1) eine untere Randfläche (5) aufweisen, die so ausgelegt ist, dass sie auf einer oberen Umfangsrandfläche eines ähnlich ausgestalteten Tabletts (12) aufliegt, wenn die Tabletts (12) ineinander gestapelt sind.

7. Tablett nach einem der Ansprüche 4 bis 6, **dadurch gekennzeichnet, dass** sich ein Ausschnittbereich (3) durch gegenüberliegende Flanschbereiche (1) erstreckt, die mit Schaltzähne-Aufnahme-Zonen (33) im Indexier-Bereich des Tabletts (12) fluchten.

8. Tablett nach Anspruch 1, **dadurch gekennzeichnet, dass** sich jede Reihe der Schaltzähne-Aufnahme-Zonen (33) an jeder Seite des Tabletts (12) zwischen den beiden äußersten benachbarten Reihen der Zellen (6, 8) befindet.

9. Tablett nach Anspruch 1 oder Anspruch 8, **dadurch gekennzeichnet, dass** mindestens drei Reihen von Schaltzähne-Aufnahme-Zonen (33) voneinander beabstandet quer über das Tablett (12) angeordnet sind.

10. Tablett nach Anspruch 1, **dadurch gekennzeichnet, dass** ein Paar Reihen von Schaltzähne-Aufnahme-Zonen (33) zwischen drei benachbarten Reihen der Zellen (6, 8) an jeder Seite des Tabletts (12) vorgesehen sind.

11. Tablett nach einem der Ansprüche 1 bis 10 in Kombination mit einem Tablett-Zuführmittel (14, 15) und einer Indexieranordnung (21), welche Kombination **dadurch gekennzeichnet ist, dass** das Tablett-Zuführmittel (14, 15) den Tablettrand stützende Führungen (14, 15) aufweist, die es dem Tablett (12) ermöglichen, sich daran entlang zu bewegen, und die Inexieranordnung (21) eine Antriebswelle (13) aufweist, die eine Schaltscheibe (11) trägt für jede fluchtende Gruppe der Schaltzähne-Aufnahme-Zonen (33) an dem Tablett (12), wobei die oder jede Schaltscheibe (11) Zähne aufweist, deren Form komplementär zu den Schaltzähne-Aufnahme-Zonen (33) ist.

12. Kombination nach Anspruch 11, **dadurch gekennzeichnet, dass** alle Schaltscheiben (11) für ein Tablett (12) drehfest in Bezug auf die Antriebswelle (13) sind, wobei eine erste der Schaltscheiben (11) in Bezug auf die Antriebswelle (13) auch axial fixiert ist, und wobei alle anderen Schaltscheiben (11) in Bezug auf die Antriebswelle (13) axial beweglich sind.

13. Kombination nach Anspruch 11 oder 12, **dadurch gekennzeichnet, dass** axiale Flächen (19, 20) der Zähne zu ihrem äußersten Punkt hin verjüngt sind, wobei die axialen Flächen (19, 20) und die Umfangsflächen der Zähne in der Form komplementär zu den Schaltzähne-Aufnahme-Zonen (33) sind.

14. Kombination nach einem der Ansprüche 11 bis 13, **dadurch gekennzeichnet, dass** das Tablett-Zuführmittel (14, 15) ermöglicht, dass zumindest zwei der Tabletts (12) in Seite-an-Seite- Konfiguration zugeführt werden.

15. Kombination nach einem der Ansprüche 11 bis 14, wobei die den Tablettrand stützenden Führungen (14, 15) Einführungs-Rampenoberflächen enthalten, die so angeordnet sind, dass sie Stiel- und Blattmaterial der Sämlinge zur Innenseite des Tabletts (12) drängen.

## Revendications

1. Bac moulé en matière plastique (12) comprenant une pluralité de cellules (4, 6, 8) disposées dans un arrangement prédéterminé, chaque cellule (4, 6, 8) étant adaptée pour contenir des semis de concert avec une boule d'un agent de croissance, lesdites cellules (4, 6, 8), au moins dans une région d'indexage dudit bac, étant alignées en rangées entre des bords opposés (34, 35) du bac (12) avec des moyens d'engagement d'indexage (2) intégralement formés avec ledit bac (12) qui s'étendent entre deux rangées voisines desdites cellules (6, 8), ledit bac (12) étant **caractérisé en ce que** lesdites cellules (4, 6, 8) présentent des parois minces, et **en ce que** lesdits moyens d'indexage (2) sont configurés pour définir une pluralité de zones de réception de dents d'indexage(33) alignées et uniformément espacées qui s'étendent entre lesdits bords opposés (34, 35) du bac (12), les zones de réception de dents d'indexage (33) étant au moins situées entre les deux rangées voisines précitées desdites cellules (6, 8) sur les deux côtés du bac (12), un élément de retenue (2) desdits moyens d'engagement d'indexage (2) s'étendant entre lesdites parois opposées desdites cellules respectives dans chacune des deux rangées voisines précitées desdites cellules (6, 8), les zones de réception de dents d'indexage (33) étant situées entre lesdits éléments de retenue (2).

2. Bac selon la revendication 1, **caractérisé en ce qu'**aucune ouverture n'est pratiquée entre une surface supérieure du bac et une région située entre lesdites deux rangées voisines desdites cellules (6, 8).

3. Bac selon la revendication 1 ou la revendication 2, **caractérisé en ce que** le bac (12) est carré ou rectangulaire dans une vue en plan.

4. Bac selon la revendication 3, **caractérisé en ce qu'**une région de bride (1) s'étend vers le bas à partir d'une surface supérieure dudit bac (12) sur au moins deux régions de bord latéral opposées.

5. Bac selon la revendication 4, **caractérisé en ce que** ladite région de bride (1) s'étend vers le bas à partir de la surface supérieure le long de chacune des quatre régions de bord latéral du bac (12).

6. Bac selon la revendication 4 ou 5,
**caractérisé en ce que** les régions de bord de bride (1) présentent une surface de bord inférieure (5) adaptée pour reposer sur une surface de bord périphérique supérieure d'un bac (12) configuré de façon similaire lorsque les bacs (12) sont emboîtés les uns dans les autres.

7. Bac selon l'une quelconque des revendications 4 à 6, **caractérisé en ce qu'**une région d'entaille (3) s'étend à travers lesdites régions de bride opposées (1) alignées avec des zones de réception de dents d'indexage (33) dans la région d'indexage du bac (12).

8. Bac selon la revendication 1, **caractérisé en ce que** chaque rangée desdites zones de réception de dents d'indexage (33) est située entre lesdites deux rangées voisines les plus extérieures desdites cellules (6, 8) sur les deux côtés du bac (12).

9. Bac selon la revendication 1 ou la revendication 8, **caractérisé en ce qu'**au moins trois rangées desdites zones de réception de dents d'indexage (33) sont situées à l'écart l'une de l'autre en travers dudit bac (12).

10. Bac selon la revendication 10, **caractérisé en ce qu'**une paire de rangées desdites zones de réception de dents d'indexage (33) est prévue entre trois desdites rangées voisines desdites cellules (6, 8) sur les deux côtés du bac (12).

11. Bac selon l'une quelconque des revendications 1 à 10, en combinaison avec des moyens d'amenée de bacs (14, 15) et un ensemble d'indexage (21), la combinaison étant **caractérisée en ce que** lesdits moyens d'amenée de bacs (14, 15) comprennent des guides de support de bord de bac (14, 15) qui permettent à un tel bac (12) de se déplacer le long de ceux-ci, et ledit ensemble d'indexage (21) comprend un arbre d'entraînement (13) qui porte un disque d'indexage (11) pour chaque groupe aligné desdites zones de réception de dents d'indexage (33) sur le bac (12), le ou chaque disque d'indexage (11) comportant des dents de forme complémentaire aux zones de réception de dents d'indexage (33).

12. Combinaison selon la revendication 11, **caractérisée en ce que** la totalité desdits disques d'indexage (11) pour un tel bac (12) sont fixés de façon rotative par rapport à l'arbre d'entraînement (13), un premier desdits disques d'indexage (11) étant aussi axialement fixé par rapport à l'arbre d'entraînement (13) avec la totalité desdits autres disques d'indexage (11) qui sont axialement mobiles par rapport audit arbre d'entraînement (13).

13. Combinaison selon la revendication 11 ou la revendication 12, **caractérisée en ce que** les faces axiales (19, 20) desdites dents s'amincissent en direction de leur point le plus extérieur, avec comme conséquence que les faces axiales (19, 20) et les faces circonférentielles des dents sont de forme complémentaire aux zones de réception de dents d'indexage (33).

14. Combinaison selon l'une quelconque des revendications 11 à 13, **caractérisée en ce que** les moyens d'amenée de bacs (14, 15) permettent de placer au moins deux desdits bacs (12) dans une configuration côte à côte.

15. Combinaison selon l'une quelconque des revendications 11 à 14, dans laquelle les guides de support de bord de bac (14, 15) comprennent des surfaces inclinées d'introduction agencées pour pousser des tiges de semis ou une matière de plante vers l'intérieur dudit bac (12).
